# FASCICULE DE BREVET EUROPEEN

(11) **EP 3 241 755 B1**
(45) Date de publication et mention de la délivrance du brevet: **10.11.2021**
(21) Numéro de dépôt: 17168509.2
(22) Date de dépôt: 27.04.2017
(51) Int. Cl.: B64D 37/02, B32B 27/20, B32B 27/08, B32B 7/12, B32B 27/12

(54) **RESERVOIR SOUPLE DE CARBURANT PRESENTANT DES PROPRIETES DE DISSIPATION DES CHARGES ELECTROSTATIQUES**
FLEXIBLER KRAFTSTOFFBEHÄLTER, DER EIGENSCHAFTEN ZUR ABLEITUNG VON ELEKTROSTATISCHEN LADUNGEN AUFWEIST
FLEXIBLE FUEL TANK HAVING PROPERTIES OF DISSIPATING ELECTROSTATIC CHARGES

(30) Priorité: 03.05.2016 FR 1654012
(43) Date de publication de la demande: 08.11.2017
(73) Titulaire: Safran Aerosystems, 78370 Plaisir (FR)
(72) Inventeur: BRIAND, Valérie, 27670 SAINT-OUEN-DU-TILLEUL (FR); FILIPPIDIS, Sara, 76800 SAINT ETIENNE DU ROUVRAY (FR); LACOINTE, Stéphanie, 27340 CRIQUEBEUF SUR SEINE (FR); VERNAY, Sébastien, 76100 ROUEN (FR)
(74) Mandataire: Cabinet Netter

(56) Documents cités:
- WO-A1-2014/117772
- FR-A1- 2 707 916
- FR-A1- 2 957 296
- US-A1- 2007 026 177
- US-A1- 2015 274 311

## Description

La présente invention concerne un réservoir souple de carburant.

Habituellement, les réservoirs souples de carburant pour aéronefs comprennent généralement une couche barrière présentant des propriétés d'imperméabilité au carburant. Cette couche barrière permet d'obtenir une imperméabilité conforme aux exigences aéronautiques pour ce type d'application, notamment la norme ETSO-C80 qui consiste en une perméabilité aux vapeurs de carburant inférieure à 6g/m²/24h.

Le document FR 2 707 916 Al décrit un procédé pour la fabrication de tels un réservoirs souples de carburant. Lors du remplissage sous pression de ces réservoirs, le frottement du fuel sur la surface interne du réservoir (cas des hélicoptères notamment) est susceptible de générer des charges électrostatiques. Or, cette accumulation potentielle de charges électrostatiques présente un danger vis-à-vis de la sécurité. En effet, les décharges électrostatiques sont susceptibles d'engendrer une explosion par inflammation du carburant gazeux, ce qui peut avoir des conséquences dramatiques.

Par conséquent, les réservoirs souples de carburant de l'art antérieur ne sont pas optimisés, notamment car ils sont potentiellement dangereux pour la sécurité.

Un but de la présente invention est donc de résoudre les problèmes cités précédemment en proposant une solution sûre, plus légère et facile à réaliser.

Ainsi, la présente invention a pour objet un réservoir souple de carburant comprenant, de l'intérieur vers l'extérieur dudit réservoir :
- un liner monocouche ou multicouche présentant des propriétés d'étanchéité au liquide, d'imperméabilité au vapeur dudit carburant, et de dissipation des charges électrostatiques, ledit liner comportant une face interne destinée à être au contact du carburant et une face externe ;
- une couche intermédiaire au contact de la face externe du liner, par exemple une couche d'enduction ; et
- une couche textile de renfort contact de la couche intermédiaire .

Le liner présente une épaisseur totale inférieure à 150 microns. Le liner présente au niveau de sa face externe, une imperméabilité vis-à-vis des vapeurs de carburant inférieure à 6g/m²/24h. La face interne du liner présente une résistivité électrique surfacique inférieure à 108 ohm/carré.

Selon des modes de réalisation préférés, le réservoir conforme à la présente invention comprend l'une au moins des caractéristiques suivantes :
- le liner comprend au moins une première couche externe présentant lesdites propriétés d'étanchéité au liquide et d'imperméabilité au vapeur de carburant et possédant comme constituant principal dans sa matrice au moins un polymère choisi parmi les polyamides tels que Pa 6, Pa6.6, Pa11, Pa12, Pa6.12, Pa4.6, les Co-polyamides, les polyamides aromatiques, les polyimides, les polyphénylènes sulfides, les polymères fluorés tels que le PVF, le PVDF, l'ETFE ou le PFA, les polyéthers cétones tels que le PEEK ou le PEKK, ou l'EVOH, et une deuxième couche interne présentant les propriétés de dissipation des charges électrostatiques et possédant comme constituant principal dans sa matrice au moins un polymère choisi parmi les polyamides tels que Pa 6, Pa6.6, Pa11, Pal2, Pa6.12, Pa4.6, les Co-polyamides, les polyamides aromatiques, les polyimides, les polyphénylènes sulfides, les polymères fluorés tels que le PVF, le PVDF, l'ETFE, le FEP ou le PFA, les polyéthers cétones tels que le PEEK ou le PEKK, l'EVOH, le polyuréthane, le nitrile et ses dérivés tels que le nitrile hydrogéné ou le nitrile/PVC, l'épichlorhydrine et ses dérivés, le fluoropolymère et ses dérivés, le polychloroprène ou le fluorosilicone,
- le liner renferme des charges conductrices telles que du noir de carbone renforçant standard, du noir de carbone conducteur, des nanotubes de carbone simple, double ou multi paroi, du graphite, des polymères conducteurs intrinsèques ou des charges métalliques, ou un mélange de certaines au moins de ces charges,
- les charges conductrices sont intégrées au sein de la matrice du liner par mélangeage en extrudeuse mono ou bi-vis, par mélangeage en voie liquide ou par mélangeage de type caoutchouc sur mélangeur bi-cylindre ou en mélangeur interne,

- liner comporte des charges conductrices à des taux de 0,5 à 100 parts pour 100 parts de polymère,
- le liner comporte des charges de type nanotubes de carbone en quantité inférieure à 10 parts pour 100 parts de polymère, de préférence inférieure à 7 parts pour 100 parts de polymère, et de manière plus avantageuse inférieure à 5 parts pour 100 parts de polymère,
- le liner comporte des charges de type noir de carbone dont la surface spécifique par BET suivant la norme ASTM D3037 est comprise entre 12 et 2000 m²/g,
- la quantité de charges conductrices dans le liner est suffisante pour assurer la présence d'un réseau interne de percolation,
- le liner est fabriqué par extrusion de film ou extrusion soufflage ou bi-extrusion ou multi-extrusion,
- le liner est fabriqué par enduction aqueuse ou en voie solvant sur un support anti-adhérent,
- le liner est fabriqué par un procédé d'application typique des peintures polymères en voie aqueuse ou en voie solvant, tel que la pulvérisation, l'application au pinceau ou au rouleau,
- la couche textile de renfort comporte plusieurs épaisseurs de renforts textiles, et
- la liaison du liner au renfort textile est assurée par collage à chaud, collage à froid, co-vulcanisation ou soudure.

Par ailleurs, la présente invention se rapporte à un procédé pour réaliser un réservoir souple de carburant tel que décrit précédemment, caractérisé en ce qu'il consiste à :
- disposer, sur la paroi extérieure d'un moule à la forme du réservoir à fabriquer, un liner présentant des propriétés d'étanchéité au liquide, d'imperméabilité au vapeur dudit carburant, et de dissipation des charges électrostatiques, ledit liner comportant une face interne destinée à être au contact du carburant,
- assembler un textile de renfort sur le liner à l'aide d'une couche intermédiaire, par exemple une couche d'enduction.

Selon un autre mode de réalisation, la présente invention se rapporte à un procédé pour réaliser un réservoir souple de carburant tel que décrit précédemment, caractérisé en ce qu'il consiste à :
- disposer un textile de renfort sur la paroi intérieure d'un moule à la forme du réservoir à fabriquer,
- assembler sur le textile de renfort, à l'aide d'une couche intermédiaire, par exemple une couche d'enduction, un liner présentant des propriétés d'étanchéité au liquide, d'imperméabilité au vapeur dudit carburant, et de dissipation des charges électrostatiques, ledit liner comportant une face interne destinée à être au contact du carburant.

L'invention va maintenant être décrite plus en détail en référence à des modes de réalisation particuliers donnés à titre d'illustration uniquement et représentés sur les figures annexées dans lesquelles :
- La figure 1 est une vue en coupe d'un premier mode de réalisation d'un réservoir conforme à la présente invention ;
- La figure 2 est une vue en coupe d'un second mode de réalisation d'un réservoir conforme à la présente invention ; et
- La figure 3 est une vue de détail en coupe d'une partie du réservoir de la figure 1, à savoir un liner.

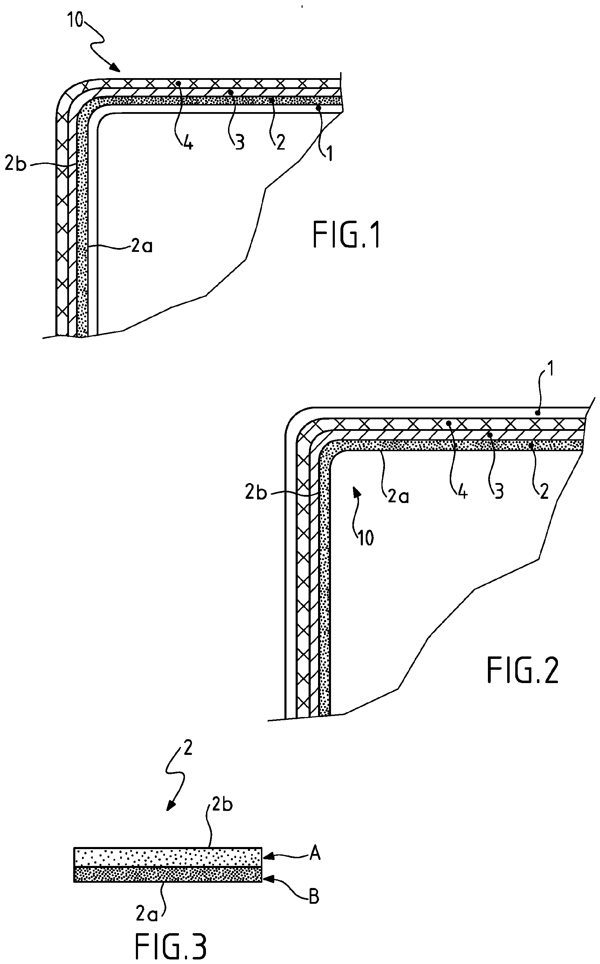

La figure 1 représente un moule 1 destiné à réaliser un réservoir 10 conforme à la présente invention.

Dans ce premier mode de réalisation, le réservoir 10 est réalisé de la manière suivante. Un liner 2, présentant des propriétés d'étanchéité au liquide, d'imperméabilité au vapeur dudit carburant et de dissipation des charges électrostatiques, est disposé sur la paroi extérieure 1b du moule 1 ayant la forme du réservoir à fabriquer. Un textile de renfort 4 est ensuite assemblé au liner 2 à l'aide d'une couche intermédiaire 3, par exemple une couche d'enduction du renfort textile.

Dans le second mode de réalisation illustré par la figure 2, un textile de renfort 4 est disposé sur la paroi intérieure la d'un moule 1 à la forme du réservoir à fabriquer, puis un liner2 présentant des propriétés d'étanchéité au liquide, d'imperméabilité au vapeur dudit carburant, et de dissipation des charges électrostatiques est assemblé sur le textile de renfort 4 à l'aide d'une couche intermédiaire 3, par exemple une couche d'enduction dudit textile.

L'assemblage entre le liner 2 et la couche intermédiaire pourra être du type collage à chaud ou à froid, co-vulcanisation ou soudure.

La couche textile de renfort 4 comporte plusieurs épaisseurs de renforts textiles.

Une fois réalisé et démoulé, le liner 2 du réservoir 10 comporte une face interne 2a destinée à être au contact du carburant.

Le liner 2 présente une épaisseur totale inférieure à 150 microns, ce qui permet d'obtenir un réservoir avec une masse réduite.

Il peut être réalisé par extrusion de film ou extrusion soufflage ou bi-extrusion ou multi-extrusion, ou bien par enduction aqueuse ou en voie solvant sur un support anti-adhérent, ou encore par un procédé d'application typique des peintures polymères en voie aqueuse ou en voie solvant, tel que la pulvérisation, l'application au pinceau ou au rouleau.

Avantageusement, le liner 2 présente au niveau de sa face externe 2b une imperméabilité vis-à-vis des vapeurs de carburant inférieure à 6g/m²/24h.

De même, la face interne 2a du liner 2 présente une résistivité électrique surfacique inférieure à 10⁸ ohm/carré.

Comme cela est représenté sur la figure 3, le liner 2 peut comporter deux couches A et B, mais il peut également ne comporter qu'une seule couche ou plus de deux couches, en particulier une couche additionnelle pour assurer la liaison entre les couches A et B, ou pour assurer la liaison entre la couche A et la couche intermédiaire 3.

Dans le mode de réalisation comportant deux couches, la première couche externe A présentant des propriétés d'étanchéité au liquide et d'imperméabilité au vapeur de carburant possède comme constituant principal dans sa matrice au moins un polymère choisi parmi les polyamides tels que Pa 6, Pa6.6, Pa11, Pa12, Pa6.12, Pa4.6, les Co-polyamides, les polyamides aromatiques, les polyimides, les polyphénylènes sulfides, les polymères fluorés tels que le PVF, le PVDF, l'ETFE ou le PFA, les polyéthers cétones tels que le PEEK ou le PEKK, ou l'EVOH, tandis que la seconde couche interne B (celle au contact du carburant) présentant des propriétés de dissipation des charges électrostatiques possède comme constituant principal dans sa matrice au moins un polymère choisi parmi les polyamides tels que Pa 6, Pa6.6, Pa11, Pa12, Pa6.12, Pa4.6, les Co-polyamides, les polyamides aromatiques, les polyimides, les polyphénylènes sulfides, les polymères fluorés tels que le PVF, le PVDF, l'ETFE, le FEP ou le PFA, les polyéthers cétones tels que le PEEK ou le PEKK, l'EVOH, le polyuréthane, le nitrile et ses dérivés tels que le nitrile hydrogéné ou le nitrile/PVC, l'épichlorhydrine et ses dérivés, le fluoropolymère et ses dérivés, le polychloroprène ou le fluorosilicone.

Afin d'apporter les propriétés de dissipation des charges électrostatiques, le liner 2 renferme des charges conductrices telles que du noir de carbone renforçant standard, du noir de carbone conducteur, des nanotubes de carbone simple, double ou multi paroi, du graphite, des polymères conducteurs intrinsèques ou des charges métalliques, ou un mélange de certaines au moins de ces charges.

Avantageusement, la quantité de charges conductrices dans le liner 2 est suffisante pour assurer la présence d'un réseau interne de percolation.

Ces charges conductrices sont intégrées au sein de la matrice du liner 2 par mélangeage en extrudeuse mono ou bi-vis, par mélangeage en voie liquide, la matrice étant dissoute dans un solvant ou en voie aqueuse, ou par mélangeage de type caoutchouc pour les matrices élastomères sur mélangeur bicylindre ou en mélangeur interne. Le procédé de mélangeage de ces charges au sein de la matrice aura une influence sur leur répartition (homogénéité de concentration, dispersion) et sur leur orientation. Il influencera donc également la proportion de charges à introduire pour obtenir une percolation.

Le liner 2 comporte des charges conductrices à des taux de 0,5 à 100 parts pour 100 parts de polymère.

Dans le cas où les charges conductrices sont de type nanotubes de carbone, ces dernières sont présentes en quantité inférieure à 10 parts pour 100 parts de polymère, de préférence inférieure à 7 parts pour 100 parts de polymère, et de manière plus avantageuse inférieure à 5 parts pour 100 parts de polymère.

L'ajout de charges conductrices au sein de la matrice en trop grande quantité peut conduire à un affaiblissement des propriétés barrières non compatible avec l'invention dans le cas d'un liner monocouche.

Les charges de type polymère conducteur intrinsèque (poly aniline par exemple) permettent de ne pas ou peu dégrader les propriétés barrières.

L'utilisation de charges conductrices lamellaires de type graphite, associées ou non aux autres types de charges, pourra s'avérer particulièrement utile pour conserver de bonnes propriétés barrières. Les charges lamellaires créent au sein de la matrice un circuit de cheminement plus tortueux pour le carburant susceptible de contrebalancer l'affaiblissement des propriétés barrières.

Dans le cas où les charges conductrices sont de type noir de carbone, leur surface spécifique par BET suivant la norme ASTM D3037 est comprise entre 12 et 2000 m²/g.

Il va de soi que la description détaillée de l'objet de l'Invention, donnée uniquement à titre d'illustration, ne constitue en aucune manière une limitation, les équivalents techniques étant également compris dans le champ de la présente invention.

## Revendications

1. Réservoir souple de carburant (10) comprenant, de l'intérieur vers l'extérieur dudit réservoir :
- un liner (2) monocouche ou multicouche présentant des propriétés d'étanchéité au liquide, d'imperméabilité au vapeur dudit carburant, et de dissipation des charges électrostatiques, ledit liner (2) comportant une face interne (2a) destinée à être au contact du carburant et une face externe (2b) ;
- une couche intermédiaire (3) au contact de la face externe (2b) du liner (2), par exemple une couche d'enduction ;
- une couche textile de renfort (4) au contact de la couche intermédiaire (3) ;
**caractérisé en ce que** le liner (2) présente une épaisseur totale inférieure à 150 microns,
le liner (2) présente, au niveau de sa face externe (2b), une imperméabilité vis-à-vis des vapeurs de carburant inférieure à 6g/m²/24h,
la face interne (2a) du liner (2) présente une résistivité électrique surfacique inférieure à 10⁸ ohm/carré.

2. Réservoir (10) selon la revendication 1, **caractérisé en ce que** le liner (2) comprend au moins :
- une première couche externe (A) présentant lesdites propriétés d'étanchéité au liquide et d'imperméabilité au vapeur de carburant et possédant comme constituant principal dans sa matrice au moins un polymère choisi parmi les polyamides, les Co-polyamides, les polyamides aromatiques, les polyimides, les polyphénylènes sulfides, les polymères fluorés, les polyéthers cétones ou l'EVOH ; et
- une deuxième couche interne (B) présentant les propriétés de dissipation des charges électrostatiques et possédant comme constituant principal dans sa matrice au moins un polymère choisi parmi les polyamides, les Co-polyamides, les polyamides aromatiques, les polyimides, les polyphénylènes sulfides, les polymères fluorés, les polyéthers cétones, l'EVOH, le polyuréthane, le nitrile et ses dérivés tels que le nitrile hydrogéné ou le nitrile/PVC, l'épichlorhydrine et ses dérivés, le fluoropolymère et ses dérivés, le polychloroprène ou le fluorosilicone.

3. Réservoir (10) selon la revendication 2, **caractérisé en ce que** lesdits polyamides sont choisis parmi Pa 6, Pa6.6, Pa11, Pa12, Pa6.12, Pa4.6.

4. Réservoir (10) selon la revendication 2, **caractérisé en ce que** lesdits polymères fluorés sont choisis parmi le PVF, le PVDF, l'ETFE ou le PFA.

5. Réservoir (10) selon la revendication 2, **caractérisé en ce que** lesdits polyéthers cétones sont choisis parmi le PEEK ou le PEKK.

6. Réservoir (10) selon l'une quelconque des revendications précédentes, **caractérisé en ce que** le liner (2) renferme des charges conductrices telles que du noir de carbone renforçant standard, du noir de carbone conducteur, des nanotubes de carbone simple, double ou multi paroi, du graphite, des polymères conducteurs intrinsèques ou des charges métalliques, ou un mélange de certaines au moins de ces charges.

7. Réservoir (10) selon la revendication 6, **caractérisé en ce que** les charges conductrices sont intégrées au sein de la matrice du liner (2) par mélangeage en extrudeuse mono ou bi-vis, par mélangeage en voie liquide ou par mélangeage de type caoutchouc sur mélangeur bicylindre ou en mélangeur interne.

8. Réservoir (10) selon l'une quelconque des revendications 6 à 7, **caractérisé en ce que** le liner (2) comporte des charges conductrices à des taux de 0,5 à 100 parts pour 100 parts de polymère.

9. Réservoir (10) selon l'une quelconque des revendications précédentes, **caractérisé en ce que** le liner (2) comporte des charges de type nanotubes de carbone en quantité inférieure à 10 parts pour 100 parts de polymère, de préférence inférieure à 7 parts pour 100 parts de polymère, et de manière plus avantageuse inférieure à 5 parts pour 100 parts de polymère.

10. Réservoir (10) selon l'une quelconque des revendications 6 à 9, **caractérisé en ce que** le liner (2) comporte des charges de type noir de carbone dont la surface spécifique par BET suivant la norme ASTM D3037 est comprise entre 12 et 2000 m²/g.

11. Réservoir (10) selon l'une quelconque des revendications 6 à 10, **caractérisé en ce que** la quantité de charges conductrices dans le liner (2) est suffisante pour assurer la présence d'un réseau interne de percolation.

12. Réservoir (10) selon l'une quelconque des revendications précédentes, **caractérisé en ce que** le liner (2) est fabriqué par extrusion de film ou extrusion soufflage ou bi-extrusion ou multi-extrusion.

13. Réservoir (10) selon l'une quelconque des revendications 1 à 11, **caractérisé en ce que** le liner (2) est fabriqué par enduction aqueuse ou en voie solvant sur un support anti-adhérent.

14. Réservoir (10) selon l'une quelconque des revendications 1 à 11, **caractérisé en ce que** le liner (2) est fabriqué par un procédé d'application typique des peintures polymères en voie aqueuse ou en voie solvant, tel que la pulvérisation, l'application au pinceau ou au rouleau.

15. Réservoir (10) selon l'une quelconque des revendications précédentes, **caractérisé en ce que** la couche textile de renfort (4) comporte plusieurs épaisseurs de renforts textiles.

16. Réservoir (10) selon l'une quelconque des revendications précédentes, **caractérisé en ce que** la liaison du liner (2) au renfort textile (4) est assurée par collage à chaud, collage à froid, co-vulcanisation ou soudure.

17. Procédé pour réaliser un réservoir souple de carburant (10) selon l'une quelconque des revendications précédentes, **caractérisé en ce qu'**il consiste à :
- disposer, sur la paroi extérieure d'un moule à la forme du réservoir à fabriquer, un liner (2) présentant des propriétés d'étanchéité au liquide, d'imperméabilité au vapeur dudit carburant, et de dissipation des charges électrostatiques, ledit liner (2) comportant une face interne (2a) destinée à être au contact du carburant,
- assembler un textile de renfort (4) sur le liner (2) à l'aide d'une couche intermédiaire (3), par exemple une couche d'enduction.

18. Procédé pour réaliser un réservoir souple de carburant (10) selon l'une quelconque des revendications 1 à 16, **caractérisé en ce qu'**il consiste à :
- disposer un textile de renfort (4) sur la paroi intérieure d'un moule à la forme du réservoir à fabriquer,
- assembler sur le textile de renfort (4), à l'aide d'une couche intermédiaire (3), par exemple une couche d'enduction, un liner (2) présentant des propriétés d'étanchéité au liquide, d'imperméabilité au vapeur dudit carburant, et de dissipation des charges électrostatiques, ledit liner (2) comportant une face interne (2a) destinée à être au contact du carburant.

## Patentansprüche

1. Flexibler Kraftstoffbehälter (10), von innen nach außen des Behälters Folgendes umfassend:
- einen einschichtigen oder mehrschichtigen Liner (2), der Eigenschaften der Flüssigkeitsdichtung, Kraftstoffdampfdurchlässigkeit und Dissipation der elektrostatischen Ladungen aufweist, wobei der Liner (2) eine Innenseite (2a), die dazu bestimmt ist, in Kontakt mit dem Kraftstoff zu sein, und eine Außenseite (2b) beinhaltet;
- eine Zwischenschicht (3) in Kontakt mit der Außenseite (2b) des Liners (2), beispielsweise eine Beschichtungsschicht;
- eine textile Verstärkungsschicht (4) in Kontakt mit der Zwischenschicht (3);
**dadurch gekennzeichnet, dass** der Liner (2) eine Gesamtdicke von weniger als 150 Mikron aufweist,
der Liner (2) im Bereich seiner Außenseite (2b) eine Undurchlässigkeit gegenüber Kraftstoffdämpfen von weniger als 6 g/m²/24 Std. aufweist,
die Innenseite (2a) des Liners (2) einen elektrischen Oberflächenwiderstand von weniger als 10⁸ Ohm/Quadrat aufweist.

2. Behälter (10) nach Anspruch 1, **dadurch gekennzeichnet, dass** der Liner (2) mindestens Folgendes umfasst:
- eine erste Außenschicht (A), die die Eigenschaften der Flüssigkeitsdichtung und Kraftstoffdampfdurchlässigkeit aufweist, und als Hauptbestandteil in seiner Matrix mindestens ein Polymer besitzt, das aus den Polyamiden, den Copolyamiden, den aromatischen Polyamiden, den Polyimiden, den Polyphenylensulfiden, den fluorhaltigen Polymeren, den Polyetherketonen, oder EVOH ausgewählt wird; und
- eine zweite Innenschicht (B), die die Eigenschaften der Dissipation der elektrostatischen Ladungen aufweist, und als Hauptbestandteil in seiner Matrix mindestens ein Polymer besitzt, das aus den Polyamiden, den Copolyamiden, den aromatischen Polyamiden, den Polyimiden, den Polyphenylensulfiden, den fluorhaltigen Polymeren, den Polyetherketonen, EVOH, Polyurethan, Nitril und deren Derivaten, wie hydriertem Nitril oder Nitril/PVC, Epichlorhydrin und dessen Derivaten, Fluorpolymer und dessen Derivaten, Polychloropren oder Fluorsilikon ausgewählt wird.

3. Behälter (10) nach Anspruch 2, **dadurch gekennzeichnet, dass** die Polyamide aus Pa 6, Pa6.6, Pa11, Pa12, Pa6.12, Pa4.6 ausgewählt werden.

4. Behälter (10) nach Anspruch 2, **dadurch gekennzeichnet, dass** die fluorhaltigen Polymere aus PVF, PVDF, ETFE oder PFA ausgewählt werden.

5. Behälter (10) nach Anspruch 2, **dadurch gekennzeichnet, dass** Polyetherketone aus PEEK oder PEKK ausgewählt werden.

6. Behälter (10) nach einem der vorstehenden Ansprüche, **dadurch gekennzeichnet, dass** der Liner (2) leitfähige Füllstoffe, wie standardgemäßen verstärkenden Ruß, leitfähigen Ruß, ein-, doppel- oder mehrwandige Kohlenstffnanoröhrchen, Grafit, intrinsische leitfähige Polymere, oder metallische Füllstoffe, oder ein Gemisch aus mindestens bestimmten dieser Füllstoffe einschließt.

7. Behälter (10) nach Anspruch 6, **dadurch gekennzeichnet, dass** die leitfähigen Füllstoffe innerhalb der Matrix des Liners (2) durch Vermischen in einem Extruder mit einer oder zwei Schnecken, durch Vermischen im Nassverfahren, oder durch Vermischen vom Typ Gummi auf einem zweizylindrischen Mischer oder im internen Mischer integriert sind.

8. Behälter (10) nach einem der Ansprüche 6 bis 7, **dadurch gekennzeichnet, dass** der Liner (2) leitfähige Füllstoffe mit einem Anteil von 0,5 bis 100 Teilen für 100 Polymerteile beinhaltet.

9. Behälter (10) nach einem der vorstehenden Ansprüche, **dadurch gekennzeichnet, dass** der Liner (2) Füllstoffe vom Typ Kohlenstoffnanoröhrchen in einer Menge von weniger als 10 Teilen für 100 Polymerteile, vorzugsweise von weniger als 7 Teilen für 100 Polymerteile und vorteilhafter von weniger als 5 Teilen für 100 Polymerteile beinhaltet.

10. Behälter (10) nach einem der Ansprüche 6 bis 9, **dadurch gekennzeichnet, dass** der Liner (2) Füllstoffe vom Typ Ruß beinhaltet, deren spezifische Oberfläche je BET gemäß der Norm ASTM D3037 zwischen 12 und 2000 m²/g enthalten ist.

11. Behälter (10) nach einem der Ansprüche 6 bis 10, **dadurch gekennzeichnet, dass** die Menge an leitfähigen Füllstoffen in dem Liner (2) ausreichend ist, um für das Vorhandensein eines internen Perkolationsnetzes zu sorgen.

12. Behälter (10) nach einem der vorstehenden Ansprüche, **dadurch gekennzeichnet, dass** der Liner (2) durch Folienextrusion oder Extrusionsblasen oder Doppel- oder Mehrfachextrusion gefertigt wird.

13. Behälter (10) nach einem der Ansprüche 1 bis 11, **dadurch gekennzeichnet, dass** der Liner (2) durch wässrige Beschichtung oder durch Lösungsmittelverfahren auf einer Antihaftunterlage gefertigt wird.

14. Behälter (10) nach einem der Ansprüche 1 bis 11, **dadurch gekennzeichnet, dass** der Liner (2) durch ein typisches Auftragungsverfahren der Polymerfarben im wässrigen Verfahren oder im Lösungsmittelverfahren, wie Zerstäuben, Auftragen mit dem Pinsel oder der Rolle gefertigt wird.

15. Behälter (10) nach einem der vorstehenden Ansprüche, **dadurch gekennzeichnet, dass** die textile Verstärkungsschicht (4) mehrere Dicken an textiler Verstärkung beinhaltet.

16. Behälter (10) nach einem der vorstehenden Ansprüche, **dadurch gekennzeichnet, dass** die Verbindung des Liners (2) mit der textilen Verstärkung (4) durch Heißverkleben, Kaltverkleben, Co-Vulkanisieren oder Schweißen hergestellt wird.

17. Verfahren zur Herstellung eines flexiblen Kraftstoffbehälters (10) nach einem der vorstehenden Ansprüche, **dadurch gekennzeichnet, dass** es besteht aus:
- Anordnen, an der Außenwand einer Form in der Form des herzustellenden Behälters, eines Liners (2), der Eigenschaften der Flüssigkeitsdichtung, Kraftstoffdampfdurchlässigkeit und Dissipation der elektrostatischen Ladungen aufweist, wobei der Liner (2) eine Innenseite (2a) aufweist, die dazu bestimmt ist, in Kontakt mit dem Kraftstoff zu kommen,
- Anbringen einer textilen Verstärkung (4) auf dem Liner (2) mithilfe einer Zwischenschicht (3), beispielsweise einer Beschichtungsschicht.

18. Verfahren zur Herstellung eines flexiblen Kraftstoffbehälters (10) nach einem der Ansprüche 1 bis 16, dadurch gekenzeichnet, dass es besteht aus:
- Anordnen einer textilen Verstärkung (4) an der Innenwand einer Form in der Form des herzustellenden Behälters,
- Anbringen auf der textilen Verstärkung (4), mithilfe einer Zwischenschicht (3), beispielsweise einer Beschichtungsschicht, eines Liners (2), der Eigenschaften der Flüssigkeitsdichtung, Kraftstoffdampfdurchlässigkeit und Dissipation der elektrostatischen Ladungen aufweist, wobei der Liner (2) eine Innenseite (2a) aufweist, die dazu bestimmt ist, in Kontakt mit dem Kraftstoff zu kommen.

## Claims

1. A flexible fuel tank (10) comprising, from the inside to the outside of said tank:
- a single-layer or multilayer liner (2) having properties of sealing with respect to the liquid, impermeability to the vapor of said fuel, and dissipation of electrostatic charges, said liner (2) including an inner face (2a) intended to be in contact with the fuel and an outer face (2b);
- an intermediate layer (3) in contact with the outer face (2b) of the liner (2), for example a coating layer;
- a textile reinforcing layer (4) in contact with the intermediate layer (3), **characterized in that** the liner (2) has a total thickness smaller than 150 microns, the liner (2) has, at its outer face (2b), an impermeability with respect to the fuel vapors below 6 g/m²/24 h,
the inner face (2a) of the liner (2) has a surface electric resistivity lower than 10⁸ ohm/square.

2. The tank (10) according to claim 1, **characterized in that** the liner (2) comprises at least:
- a first outer layer (A) having said properties of sealing with respect to the liquid and impermeability to the fuel vapor and having as main component in its matrix at least one polymer chosen from among polyamides, co-polyamides, aromatic polyamides, polyimides, polyphenol sulfites, fluorinated polymers, polyether ketones or EVOH; and
- a second inner layer (B) having the properties of dissipating electrostatic charges and having as primary component in its matrix at least one polymer chosen from among polyamides, co-polyamides, aromatic polyamides, polyimides, polyphenol sulfides, fluorinated polymers, polyether ketones or EVOH, polyurethane, nitrile and its derivatives such as hydrogenated nitrile or nitrile/PVC, epichlorhydrin and its derivatives, fluoropolymer and its derivatives, polychloroprene or fluorosilicone.

3. The tank (10) according to claim 2, **characterized in that** said polyamides are chosen among Pa 6, Pa 6.6, Pa11, Pa12, Pa 6.12, Pa 4.6.

4. The tank (10) according to claim 2, **characterized in that** said fluorinated polymers are chosen among PVF, PVDF, ETFE or PFA.

5. The tank (10) according to claim 2, **characterized in that** said polyether ketones are chosen among PEEK or PEKK.

6. The tank (10) according to any one of the preceding claims, **characterized in that** the liner (2) contains conducting fillers such as standard reinforcing carbon black, conducting carbon black, single-, double- or multi-walled carbon nanotubes, graphite, intrinsic conducting polymers or metal fillers, or a mixture of at least some of these fillers.

7. The tank (10) according to claim 6, **characterized in that** the conducting fillers are integrated within the matrix of the liner (2) by mixing in a single or twin screw extruder, by mixing through liquid means or by mixing of the rubber type on two-cylinder mixer or in an internal mixer.

8. The tank (10) according to any one of claims 6 to 7, **characterized in that** the liner (2) includes conducting fillers at rates from 0.5 to 100 parts per 100 parts polymer.

9. The tank (10) according to any one of the preceding claims, **characterized in that** the liner (2) includes fillers of the carbon nanotube type in a quantity lower than 10 parts per 100 parts polymer, preferably less than 7 parts per 100 parts polymer, and more advantageously smaller than 5 parts per 100 parts polymer.

10. The tank (10) according to any one of claims 6 to 9, **characterized in that** the liner (2) includes fillers of the carbon black type, the specific surface of which per BET according to standard ASTM D3037 is comprised between 12 and 2000 m²/g.

11. The tank (10) according to any one of claims 6 to 10, **characterized in that** the quantity of conducting fillers in the liner (2) is sufficient to ensure the presence of an internal percolation network.

12. The tank (10) according to any one of the preceding claims, **characterized in that** the liner (2) is manufactured by film extrusion or extrusion blow molding or bi-extrusion or multi-extrusion.

13. The tank (10) according to any one of claims 1 to 11, **characterized in that** the liner (2) is manufactured by aqueous coating or through solvent means on an anti-adhesive substrate.

14. The tank (10) according to any one of claims 1 to 11, **characterized in that** the liner (2) is manufactured using a typical application method for polymer paints through aqueous means or solvent means, such as spraying, application by brush or roller.

15. The tank (10) according to any one of the preceding claims, **characterized in that** the reinforcing textile layer (4) includes several thicknesses of textile reinforcements.

16. The tank (10) according to any one of the preceding claims, **characterized in that** the bonding of the liner (2) to the textile reinforcement (4) is provided by hot gluing, cold gluing, co-vulcanization or welding.

17. A method for producing a flexible fuel tank (10) according to any one of the preceding claims, **characterized in that** it consists of:
- positioning, on the outer wall of a mold in the shape of the tank to be manufactured, a liner (2) having properties of sealing against the liquid, impermeability to the vapor of said fuel, and dissipation of electrostatic charges, said liner (2) including an inner face (2a) intended to be in contact with the fuel,
- assembling a reinforcing textile (4) on the liner (2) using an intermediate layer (3), for example a coating layer.

18. A method for producing a flexible fuel tank (10) according to any one of claims 1 to 16, **characterized in that** it consists of:
- positioning a reinforcing textile (4) on the inner wall of a mold in the shape of the tank to be manufactured,
- assembling on the reinforcing textile (4), using an intermediate layer (3), for example a coating layer, a liner (2) having properties of sealing against the liquid, impermeability to the vapor of said fuel, and dissipation of the electrostatic charges, said liner (2) including an inner face (2a) intended to be in contact with the fuel.
